Europäisches Patentamt

(19) European Patent Office

Office européen des brevets

(11) Numéro de publication: **0 018 881**
**B1**

(12) **FASCICULE DE BREVET EUROPEEN**

(45) Date de publication du fascicule du brevet: **15.09.82**

(51) Int. Cl.³: **B 01 J 3/04,** C 08 F 2/34, C 08 F 10/02

(21) Numéro de dépôt: **80400518.9**

(22) Date de dépôt: **18.04.80**

(54) **Procédé pour réduire les risques d'inflammation et d'explosion résultant de la décomposition de l'éthylène sous haute pression et dispositif pour la mise en oeuvre dudit procédé.**

(30) Priorité: **25.04.79 FR 7910442**

(43) Date de publication de la demande:
**12.11.80 Bulletin 80/23**

(45) Mention de la délivrance du brevet:
**15.09.82 Bulletin 82/37**

(84) Etats contractants désignés:
**AT BE CH DE GB IT LI LU NL SE**

(56) Documents cités:
**FR - A - 2 116 147**
**FR - A - 2 165 018**

**CHEMICAL ABSTRACTS, vol. 78, no. 16, 23 avril 1973, ref. 99577p, page 120, colonne de gauche Columbus, Ohio, US J.J.L. MARZAIS: "Water injecting device for high pressure gases" & Saf. High Pressure Polyethylene Plants 1973, 42—8**

(73) Titulaire: **Société Chimique des Charbonnages Tour Aurore Place des Reflets Cédex no 5 F-92080 Paris La Défense 2 (FR)**

(72) Inventeur: **Grasset, Daniel Saint Nicolas de la Taille F-76170 Lillebonne (FR)**
Inventeur: **Martinot, Bernard no 14, le Toupin F-76170 Lillebonne (FR)**

(74) Mandataire: **Dubost, Thierry Société Chimique des Charbonnages Service Propriété Industrielle B.P. No 1 F-62160 Bully Les Mines (FR)**

Courier Press, Leamington Spa, England.

# Procédé pour réduire les risques d'inflammation et d'explosion résultant de la décomposition de l'éthylène sous haute pression et dispositif pour la mise en oeuvre dudit procédé

La présente invention concerne un procédé pour réduire les risques d'inflammation et d'explosion résultant de la décomposition de l'éthylène dans une installation de polymérisation sous haute pression, ainsi qu'un dispositif pour la mise en oeuvre dudit procédé.

Il est bien connu que, au cours de la réaction de polymérisation de l'éthylène sous haute pression (300 à 3000 bars environ) et à haute température (150°C à 350°C environ), certains incidents de fonctionnement tels que des défaillances mécaniques ou une pureté insuffisante de l'éthylène gazeux peuvent, malgré le contrôle attentif des indicateurs de pression et de température, provoquer l'échauffement jusqu'à une température supérieure à 450°C environ d'une fraction, même infime, de l'éthylène contenu dans le réacteur de polymérisation ou dans le séparateur (fonctionnant habituellement sous une pression de 100 à 500 bars). Un tel échauffement suffit à initier la décomposition de cette fraction d'éthylène en un mélange de carbone, d'hydrogène et de méthane. De plus, les conditions précitées de fonctionnement des réacteur et séparateur sont telles qu'elles permettent une propagation rapide de toute décomposition initiée, conduisant invariablement à l'élévation rapide de la pression et/ou la température. La rupture d'au moins un organe (disque, soupape, vanne) de protection protège les réacteur et séparateur contre les surpressions et permet aux produits de décomposition de s'échapper vers l'extérieur. Outre le phénomène de pollution causé par le rejet à l'extérieur de carbone pulvérulent, on doit surtout redouter l'inflammation des gaz de décomposition qui est à l'origine d'explosions violentes pouvant occasionner des dégats matériels et humains.

Contre cette inflammation et ses conséquences néfastes, plusieurs solutions cherchant à satisfaire aux exigences de sécurité lors de la détente d'installations de polymérisation sous haute pression ont déjà été proposées, notamment par les brevets français n° 2.116.147, 2.165.018 et 2.358.427 et par les demandes de brevet japonais n° 48—51.336/73 et 48—51.337/73 déposées le 9 Mai 1973. Ces solutions ont toutes en commun de remédier à l'une au moins des trois conditions supposées de l'inflammation des gaz de décomposition: pression élevée, température élevée, vitesse supersonique des gaz. Elles consistent donc le plus souvent à refroidir par différents moyens les gaz de décomposition dont la température initiale est, comme on l'indique plus haut, supérieure à 450°C et peut atteindre jusqu'à 1500°C. Accessoirement il est proposé, en vue d'éviter la pollution de l'atmosphère environnante par les gaz de décomposition, d'abaisser la pression et/ou d'abaisser la vitesse des gaz en dessous de la vitesse du son. En bref, toutes ces solutions sont basées sur l'hypothèse formulée dans le brevet français n° 2.116.147, selon laquelle le problème de l'inflammation des gaz de décomposition se résumerait au problème de l'auto-inflammation de ces gaz par l'effet de leur propre température élevée.

Or la demanderesse vient de faire la découverte surprenante que, contrairement à l'enseignement de la technique actuelle, l'auto-inflammation des gaz de décomposition par l'effet de leur propre température élevée ne constitue pas nécessairement la cause principale de l'inflammation de ces gaz et n'en constitue même le plus souvent qu'une cause secondaire. Cette découverte résulte d'expériences effectuées, en l'absence de décomposition dans le réacteur, par des essais de rupture d'au moins un organe de protection, la température de l'éthylène à l'instant précédant la rupture ne dépassant pas 200°C. Ces expériences ont montré que, malgré l'absence d'échauffement anormal avant la rupture de l'organe, on observe l'émission de gaz enflammé à la sortie de la conduite d'évacuation (cheminée) et on peut mettre en évidence l'existence d'une onde de choc se propageant à une vitesse de 500 à 700 m/s environ. Il semble que l'on puisse expliquer le phénomène observé de la façon suivante: après la rupture de l'organe de protection, l'air contenu dans la conduite d'évacuation (cheminée) et initialement ou repos est parcouru par une onde de pression se déplaçant à une vitesse fonction de son intensité et supérieure à la vitesse du son dans le milieu. Cette onde de pression, qui précède donc l'écoulement de l'éthylène ou des gaz de décomposition dans la conduite d'évacuation, comprime et échauffe l'air contenu dans ladite conduite. De plus, étant donné que la conduite d'évacuation n'est généralement pas intégralement linéaire mais comporte au moins soit une section courbée reliant la paroi latérale du réacteur ou séparateur à la section verticale de la cheminée soit une variation de section, l'onde de pression n'est généralement pas plane et peut donc se réfléchir sur les parois de la conduite d'évacuation; ces réflexions de l'onde rendent possibles des focalisations d'ondes sur l'axe de symétrie de ladite conduite et donc l'échauffement de points particuliers dans la conduite d'évacuation. Enfin la possibilité de réflexions successives du disque de protection sur les parois de la cheminée constitue une troisième cause d'échauffements locaux accompagnant l'échauffement par l'onde de pression et y ajoutant leurs effets.

Les phénomènes d'échauffement qui viennent d'être décrits suffisent en l'absence de toute décomposition de l'éthylène, à porter la température en des points particuliers de la cheminée à plus de 600°C. Les phénomènes de diffusion, les différences de vitesse du gaz en écoulement dans la cheminée entre les parois de celle-ci et son axe de symétrie, les variations de section et les changements de direction de la cheminée contribuent localement à la formation de zones de pré-mélange de l'air et du gaz. C'est à l'interface air chaud-éthylène, qui se déplace à une vitesse inférieure à l'onde de pression et qui succède donc à cette onde, et plus précisément au niveau de ces zones de pré-mélange, qui s'initie l'inflammation. Les zones de pré-mélange sont ensuite entraînées par la vidange vers l'extérieur de la cheminée; elles disparaissent donc rapidement dans la cheminée lors du replacement de l'air par le gaz. De même la flamme est portée par l'écoulement vers la section de sortie de la cheminée où elle se maintient le temps de la vidange complète. L'inflammation de gaz par l'effet d'onde de pression qui vient d'être décrit est favorisée par une température élevée dudit gaz, celle-ci ayant pour effet d'accroître la température du mélange air-gaz et par suite un gaz de décomposition est susceptible de s'enflammer par l'effet d'onde de pression plus aisément que de l'éthylène à 200°C. Cet accroissement de la température du mélange air-gaz fait ainsi apparaître l'auto-inflammation des gaz de décomposition par l'effet de leur propre température, jadis considérée comme la cause première des inflammations, comme une cause dérivée et secondaire de l'effet d'onde de pression.

Ceci explique que toutes les solutions de l'art antérieur au problème des inflammations, décrites dans les brevets déjà cités, aient eu pour objet de refroidir les gaz de décomposition soit au stade de leur vidange vers l'extérieur soit au stade de leur récupération. Ces solutions ne prenaient donc pas suffisamment en compte le paramètre temporel du phénomène depuis l'ouverture de l'organe de protection jusqu'à la fin de la vidange. Ce paramètre s'est pourtant révélé, d'après les travaux de la demanderesse, être d'une importance cruciale. En effet les brevets cités indiquent que la durée de la vidange est généralement comprise entre 3 et 10 secondes et le brevet français n° 2.116.147 indique que le temps écoulé entre l'ouverture de l'organe de protection et le moment où le gaz arrive au dispositif de refroidissement est compris entre 50 et 100 millisecondes environ. Il n'est pas étonnant dans ces conditions que l'efficacité des solutions de l'art antérieur ait été insuffisante puisque, selon les observations de la demanderesse, la durée de la phase instationnaire de l'écoulement donnant lieu à l'effet d'onde de pression est le plus souvent inférieure ou egale à 25 millisecondes. Il resulte de la découverte de la nature et de la durée de la cause première des inflammations résultant de la décomposition de l'éthylène dans une installation de polymérisation sous haute pression que l'efficacité d'un procédé et d'un dispositif pour en réduire les risques ne dépend pas tant de la puissance des moyens mis en oeuvre que de l'instant auquel ils sont mis en oeuvre. En particulier il faut noter que le procédé de récupération des produits de décomposition décrit dans le brevet français n° 2.358.427 est d'une efficacité très aléatoire lorsque les risques d'inflammation n'ont pas été supprimés dès la sortie du réacteur ou séparateur.

Un premier but de la présente invention consiste donc à réduire les risques d'inflammation et par conséquent d'explosion résultant de la décomposition de l'éthylène sous haute pression, et en particulier ceux survenant au cours de la phase instationnaire d'écoulement des gaz de décomposition. Un second but de la présente invention consiste à minimiser les risques d'inflammation et d'explosion au cours de ladite phase instationnaire à un point tel que la récupération des gaz de décomposition, notamment en vue d'éviter toute pollution, puisse être effectuée de manière parfaitement sûre.

La demanderesse a découvert de manière surprenante que les buts précités peuvent être atteints en s'écartant des enseignements de l'art antérieur et de manière simple en adoptant une structure particulière du dispositif d'évacuation des gaz résultant de la décomposition de l'éthylène et contenus dans une enceinte sous haute pression, ledit dispositif étant adjacent à ladite enceinte et séparé d'elle par au moins un organe de protection et comprenant:
— un collecteur de volume compris entre 2 et 100 fois le volume de l'enceinte,
— au moins une conduite de liaison entre l'enceinte et ledit collecteur et
— au moins une cheminée reliant le collecteur à l'extérieur.

Comme indiqué précédemment, l'enceinte sous haute pression constitue soit le réacteur (pression: 300 à 3000 bars environ) dans lequel est effectuée la polymérisation de l'éthylène soit le séparateur (pression 100 à 500 bars) dans lequel est effectuée la séparation du polymère formé et de l'éthylène n'ayant pas réagi. Cette enceinte est généralement de forme cylindrique ou tubulaire et sa paroi latérale est munie d'au moins un, généralement plusieurs, organe(s) de protection. Le collecteur du dispositif selon l'invention est de préférence relié à ladite enceinte par un nombre de conduites égal au nombre d'organes de protection. Ce collecteur est avantageusement de forme oblongue, cylindrique ou quasi-cylindrique, et il est de préférence disposé suivant un axe horizontal, de manière à ce que sa section moyenne dans un plan horizontal soit très élevée. Cette section sera de préférence égale à de 100 à 10.000 fois la section de l'ensemble des organes de protection. La conduite de liaison provenant de l'enceinte pénètre dans le collecteur soit par le fond soit par le sommet de celui-ci. Le collecteur peut être disposé à un niveau soit

**0018881**

supérieur soit inférieur à celui de l'enceinte.

Le dispositif selon l'invention peut comporter plusieurs cheminées reliant le collecteur à l'extérieur. Cependant il est préférable qu'il ne comporte qu'une seule telle cheminée afin de supprimer le risque d'une inflammation retardée des gaz issus de la cheminée par les gaz issus d'une autre cheminée. La cheminée unique est de préférence disposée verticalement au-dessus du collecteur. Lorsque, comme c'est le cas le plus fréquent on désirera équiper chaque enceinte sous haute pression de l'installation de polymérisation (réacteur et séparateur) au moyen d'un dispositif selon l'invention, on prendra soin pour la raison précitée de disposer la cheminée du dispositif d'évacuation du réacteur sur l'extrémité du collecteur de ce dispositif la plus éloignée de l'extrémité du collecteur du dispositif d'évacuation du séparateur sur laquelle se trouve la cheminée de ce dernier dispositif.

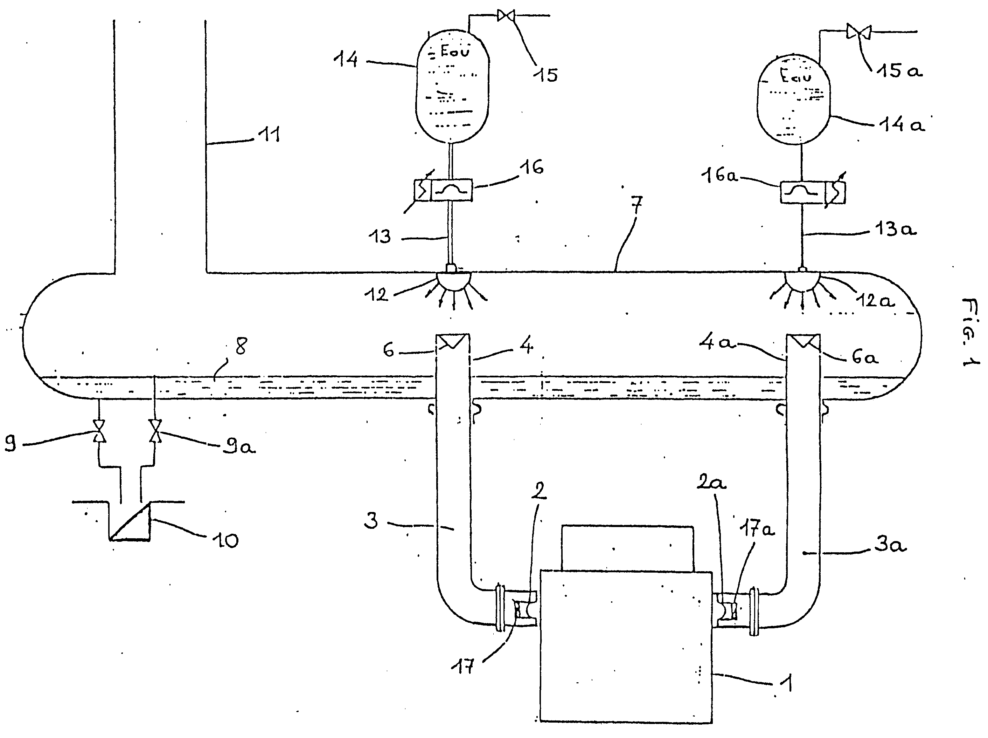

Selon un mode de réalisation avantageux de l'invention, l'une au moins des conduites de liaison entre l'enceinte et le collecteur est munie, à son extrémité supérieure, d'un dispositif disperseur de gaz capable de modifier la direction des gaz provenant de l'enceinte et de répartir les gaz de façon homogène dans le collecteur. En effet chacune des conduites de liaison est généralement disposée verticalement entre l'enceinte et le collecteur, à l'exception éventuellement d'une portion courbée immédiatement adjacente à l'enceinte lorsque celle-ci est elle-même disposée verticalement. Par suite les gaz de décomposition parvenant à l'extrémité supérieure de la conduite de liaison iront frapper perpendiculairement, en l'absence d'obstacle approprié sur leur trajectoire, la paroi opposée du collecteur et subiront une série de réflexions selon un faisceau d'angles variés avant de se diriger vers la cheminée. La demanderesse a trouvé que pour parfaire la fonction de suppression des ondes de pression parcourant les gaz évacués, fonction déjà remplie par le dispositif évacuation décrit jusqu'içi, il est avantageux de modifier la direction des gaz évacués dès qu'ils entrent dans le collecteur de manière à répartir lesdits gaz de façon homogène dans le collecteur et à rendre leur trajectoire horizontale ou quasi-horizontale. Ceci obtenu de manière simple au moyen d'un dispositif disperseur-déflecteur fixé à l'extrémité de la conduite de liaison et ayant par exemple la forme d'un cône relié à la conduite de liaison par une série de barreaux (comme on le voit sur la figure en annexe) ou bien la forme d'une pomme d'arrosoir.

Le collecteur du dispositif d'évacuation selon l'invention peut, le cas échéant, être rempli en partie d'un liquide inerte de chaleur de vaporisation élevée afin de refroidir les gaz évacués. La forme oblongue selon un axe horizontal du collecteur est favorable à un refroidissement efficace des gaz de par la surface de contact élevée entre lesdits gaz et le liquide inerte de chaleur de vaporisation élevée. Par liquide inerte il faut entendre un composé chimique non réactif vis-à-vis de l'éthylène et des gaz de décomposition et se présentant à l'état liquide dans les conditions normales de service du collecteur (pression proche de la pression atmosphérique, température proche de la température extérieure ambiante). Le liquide inerte de chaleur de vaporisation élevée est de préférence l'eau mais peut aussi être un hydrocarbure halogéné. Dans ce mode de réalisation de l'invention selon lequel le collecteur est en partie rempli d'un liquide inerte, il est souhaitable, lorsque la conduite de liaison pénètre dans le collecteur par le fond de celui-ci, qu'elle dépasse le niveau du liquide inerte de manière à ce que ledit liquide ne puisse pas, en l'absence des turbulences causées par l'évacuation des gaz de décomposition, pénétrer dans la conduite de liaison et atteindre l'organe de protection en risquant de la fragiliser ou d'obturer la conduite.

Le collecteur du dispositif d'évacuation selon l'invention peut le cas échéant comporter au moins un dispositif d'injection de liquide inerte de chaleur de vaporisation élevée dont le fonctionnement est commandé par des moyens de détection de l'ouverture d'un organe de protection. La définition de ce liquide inerte est identique à celle donné précédemment et il s'agit de préférence du même liquide que celui remplissant en partie le collecteur. Lorsque le collecteur comporte au moins un tel dispositif d'injection, celui-ci est de préférence disposé selon le même axe que la conduite de liaison et que le dispositif disperseur de gaz lorsqu'il existe. Le fonctionnement du dispositif d'injection de liquide a pour effet de refroidir les gaz de décomposition évacués et, lorsque le collecteur est rempli en partie de liquide inerte, de compléter le refroidissement desdits gaz assuré par la présence de ce liquide inerte. Differents types de dispositif d'injection peuvent équiper le collecteur selon l'invention, par exemple un dispositif en forme de pomme d'arrosoir.

Dans le cas où désire assurer, outre la réduction des risques d'inflammation et d'explosion résultant de la décomposition de l'éthylène, la récupération des gaz de décomposition en vue d'éviter toute pollution de l'atmosphère, le dispositif d'évacuation selon l'invention devra en outre comporter:
— un organe de protection séparant le collecteur de chaque cheminée, et
— une capacité de récupération des gaz évacués reliée au collecteur par un conduit de liaison.

Cette capacité de récupération doit avoir un volume important pour pouvoir recueillir sous une pression inférieure à 50 bars la totalité du contenu de l'enceinte sous haute pression dans laquelle a lieu la décomposition. Ce volume pourra êtra supérieur à celui du collecteur et même égal à plusieurs fois celui-ci. La capacité de récupération pourra comporter, outre le conduit de liaison avec le collecteur, un conduit d'échappement muni d'une vanne et par lequel les gaz récupérés peuvent être acheminés vers un dispositif de combustion.

Enfin dans le cas où l'on désire diminuer encore les risques d'inflammation ou d'explosion en maintenant sous atmosphère inerte, c'est-à-dire substantiellement exempte de gaz capables de réagir avec les gaz de décomposition (méthane, hydrogène, éthylène) et en particulier substantiellement exempte d'oxygène, la plus grande partie du dispositif d'évacuation selon l'invention, la cheminée (ou chaque cheminée) dudit dispositif pourra comporter, en vue de limiter la consommation du gaz constituant l'atmosphère inerte, un dispositif d'obturation occupant toute la section de la cheminée, tel que par exemple un ballon ou une baudruche en caoutchouc, et gonflé au moyen d'un gaz à une pression supérieure à celle régnant dans le collecteur.

L'invention sera mieux comprise grâce à l'illustration du mode de réalisation représenté sur la figure unique en annexe. Selon ce mode de réalisation, la référence 1 désigne l'enceinte sous haute pression (réacteur ou séparateur) munie de ses disques de protection 2 et 2a la séparant des conduites de liaison 3 et 3a. Les sections supérieures 4 et 4a de ces conduites sont percées de fentes et surmontées respectivement par des dispositifs disperseurs-déflecteurs 6 et 6a en forme de cône renversé. Les conduites 3 et 3a pénètrent dans le collecteur 7 horizontal et oblong par le fond de celui-ci. Le fond du collecteur 7 est rempli d'un volume d'eau 8 et l'on peut noter que le sommet des conduites 3 et 3a dépasse le niveau de la surface de l'eau. Il est aussi prévu des vannes 9 et 9a dans le fond du collecteur pour évacuer une partie de l'eau vers un trop-plein 10 en cas de nécessité. A l'une des extrémités du collecteur 7 se trouve la cheminée unique 11 permettant l'évacuation du contenu de l'enceinte 1 vers l'extérieur. Le collecteur 7 est encore muni de dispositifs d'injection d'eau 12 et 12a disposés à l'aplomb des dispositifs disperseurs de gaz 6 et 6a. Ces dispositifs 12 et 12a sont reliés par des conduits 13 et 13a à des réservoirs d'eau 14 et 14a eux-mêmes alimentés au travers des vannes 15 et 15a par des sources d'eau non représentées sur la figure. Le fonctionnement des dispositifs 12 et 12a est commandé par l'ouverture de vannes pyrotechniques 16 et 16a, ladite ouverture étant elle-même commandée par la détection de la rupture d'au moins l'un des disques 2 et 2a par des dispositifs de détection 17 et 17a placés à proximité immédiate desdits disques. Les systèmes de commande reliant les dispositifs 17 et 17a aux vannes 16 et 16a n'ont pas été représentés sur la figure.

Ainsi la présente invention concerne aussi un procédé pour réduire les risques d'explosion resultant de la décomposition de l'éthylène dans une enceinte sous haute pression, consistant à évacuer les gaz de décomposition dans un dispositif d'évacuation tel que celui décrit et illustré précédemment.

Il est important de préciser que, lorsque le procédé selon l'invention inclut une phase de récupération de gaz de décomposition dans une capacité telle que décrit plus haut, ladite phase de récupération doit être effectuée dans des conditions de pression inférieure à 50 bars, de température inférieure à 450°C et de concentration en oxygène inférieure à 5%. De même, lorsque le procédé selon l'invention inclut le maintien sous atmosphère inerte de la plus grande partie du dispositif d'evacuation, il est préféré que la pression de gaz inerte à l'intérieur dudit dispositif d'évacuation soit inférieure à 1,5 bar. Enfin le procédé selon l'invention peut être combiné avec des procédés connus de réduction des risques d'inflammation et d'explosion résultant de la décomposition de l'éthylène sous haute pression, notamment avec les procédés consistant à refroidir les gaz de décomposition comme par exemple ceux décrits dans les brevets français n° 2.116.147 et 2.165.018.

## Revendications

1. Dispositif d'évacuation des gaz résultant de la décomposition de l'éthylène et contenus dans une enceinte sous haute pression, ledit dispositif étant adjacent à ladite enceinte et séparé d'elle par au moins un organe de protection, caractérisé en ce qu'il comprend:
— un collecteur de volume compris entre 2 et 100 fois le volume de l'enceinte,
— au moins une conduite de liaison entre l'enceinte et le collecteur, et
— au moins une cheminée reliant le collecteur à l'extérieur.

2. Dispositif selon la revendication 1, caractérisé en ce que le nombre de conduites de liaison entre l'enceinte et le collecteur est égal au nombre d'organes de protection.

3. Dispositif selon l'une des revendications 1 et 2, caractérisé en ce que le collecteur est de forme oblongue et disposé suivant un axe horizontal, sa section moyenne dans le plan horizontal étant égale à de 100 à 10 000 fois la section de l'ensemble des organes de protection.

4. Dispositif selon l'une des revendications 1 à 3, caractérisé en ce qu'il comprend une seule cheminée reliant le collecteur à l'extérieur.

5. Dispositif selon l'une des revendications 1 à 4, caractérisé en ce que l'une au moins des conduites de liaison entre l'enceinte et le collecteur est munie d'un dispositif disperseur de gaz capable de modifier la direction des gaz provenant de l'enceinte.

6. Dispositif selon l'une des revendications 1 à 5, caractérisé en ce qu'il comprend en outre au moins un dispositif d'injection de liquide dit inerte dans le collecteur, c'est à dire d'un liquide non réactif vis à vis de l'ethylène et des gaz de décomposition, le fonctionnement du dispositif d'injection étant commandé par des moyens de détection de l'ouverture d'un organe de protection.

7. Dispositif selon la revendication 6, caractérisé en ce que le dispositif d'injection de liquide inerte est disposé selon le même axe que la conduite de liaison entre l'enceinte et le collecteur.

8. Dispositif selon l'une des revendications 1 à 7, comprenant en outre:
— un organe de protection séparant le collecteur de la cheminée, et
— une capacité de récupération des gaz évacués reliée au collecteur par un conduit de liaison, le volume de ladite capacité étant tel que la totalité du contenu de l'enceinte sous pression peut y être recueillie sous une pression inferieure à 50 bars.

9. Dispositif selon la revendication 8, caractérisé en ce que le volume de ladite capacité de réupération est supérieur au volume du collecteur.

10. Procédé pour réduire les risques d'inflammation et d'explosion résultant de la décomposition de l'éthylène dans une enceinte sous haute pression, consistant à évacuer les gaz de décomposition dans un dispositif selon l'une des revendications 1 à 9.

11. Procédé selon la revendication 10. caractérisé en ce que les gaz de décomposition sont récupérés, après leur évacuation, dans des conditions de pression inférieure à 50 bars, de concentration en oxygène inférieure à 5% et de température inférieure à 450°C.

12. Procédé selon l'une des revendications 10 et 11, caractérisé en ce que le collecteur du dispositif d'évacuation est en partie rempli d'un liquide inerte de chaleur de vaporisation élevée.

**Patentansprüche**

1. Vorrichtung zum Evakuieren von aus der Spaltung von Äthylen resultierenden und in einem unter hohem Druck stehenden umschlossenen Raum enthaltenen Gasen, welche Vorrichtung dem umschlossenen Raum benachbart und von diesem durch mindestens ein Schutzorgan getrennt ist, dadurch gekennzeichnet, daß sie umfaßt:
— einen Sammelbehälter mit einem zwischen dem 2- und 100-fachen Volumen des umschlossenen Raumes liegenden Volumen,
— mindestens eine Verbindungsleitung zwischen dem umschlossenen Raum und dem Sammelbehälter und
— mindestens einen den Sammelbehälter mit der Außenatmosphäre verbindenden Abzug.

2. Vorrichtung nach Anspruch 1, dadurch gekennzeichnet, daß die Anzahl der Verbindungsleitungen zwischen dem umschlossenen Raum und dem Sammelbehälter gleich ist der Anzahl der Schutzorgane.

3. Vorrichtung nach Anspruch 1 oder 2, dadurch gekennzeichnet, daß der Sammelbehälter längliche Form besitzt und längs einer Horizontalachse angeordnet ist, wobei sein mittlerer Querschnitt in der Horizontalebene gleich ist dem 100- bis 10.000-fachen Querschnitt der Gesamtheit der Schutzorgane.

4. Vorrichtung nach einem der Ansprüche 1 bis 3, dadurch gekennzeichnet, daß sie einen einzigen den Sammelbehälter mit der Außenatmosphäre verbindenden Abzug enthält.

5. Vorrichtung nach einem der Ansprüche 1 bis 4, dadurch gekennzeichnet, daß zumindest eine der Verbindungsleitungen zwischen dem umschlossenen Raum und dem Sammelbehälter mit einer Gasdispergiereinrichtung versehen ist, durch die die Richtung der aus dem umschlossenen Raum kommenden Gase veränderbar ist.

6. Vorrichtung nach einem der Ansprüche 1 bis 5, dadurch gekennzeichnet, daß sie darüberhinaus mindestens eine Einrichtung zur Einspritzung inerter Flüssigkeit in den Sammelbehälter, d.h. von gegenüber dem Äthylen oder den Gasen aus der Spaltung nicht reagierender Flüssigkeit, enthält, wobei die Funktion der Einspritzeinrichtung durch Mittel zur Abfühlung der Öffnung eines Schutzorganes gesteuert ist.

7. Vorrichtung nach Anspruch 6, dadurch gekennzeichnet. daß die Einrichtung zur Einspritzung inerter Flüssigkeit längs der selben Achse wie die Verbindungsleitung zwischen dem umschlossenen Raum und dem Sammelbehälter angeordnet ist.

8. Vorrichtung nach einem der Ansprüche 1 bis 7, darüberhinaus enthaltend:
— ein den Sammelbehälter von dem Abzug trennendes Schutzorgan und
— einen mit dem Sammelbehälter durch eine Verbindungsleitung verbundenen Aufbereitungsraum für die abgeführten Gase, dessen Volumen derart ist, daß der gesamte Inhalt des unter Druck stehenden umschlossenen Raumes darin unter einem Druck unterhalb von 50 bar gesammelt werden kann.

9. Vorrichtung nach Anspruch 8, dadurch gekennzeichnet, daß das Volumen des genannten Aufbereitungsraumes größer ist als das Volumen des Sammelbehälters.

10. Verfahren zum Vermindern der Risken einer Entzündung und Explosion resultierend aus der Spaltung von Äthylen in einem umschlossenen Raum, welches Verfahren darin besteht, daß die Gase der Spaltung in eine Vorrichtung nach einem der Ansprüche 1 bis 9 abgeführt werden.

11. Verfahren nach Anspruch 10, dadurch gekennzeichnet, daß die Gase der Spaltung nach ihrem Abführen auf einen Druck unterhalb 50 bar, eine Sauerstoffkonzentration von weniger als 5% und eine Temperatur unterhalb 450°C aufbereitet werden.

12. Verfahren nach Anspruch 10 oder 11, dadurch gekennzeichnet, daß der Sammelbehälter der Evakuiervorrichtung teilweise mit einer inerten Flüssigkeit erhöhter Verdampfungswärme gefüllt ist.

**Claims**

1. Apparatus for evacuating the decomposition gases of ethylene contained in a high-pressure vessel, said apparatus being adjacent to said vessel and separated therefrom by at least one safety means, characterized in that it comprises:
— a reservoir with a volume between 2 and 100 times that of the vessel,
— at least one connecting pipe between the vessel and the reservoir, and
— at least one chimney connecting the reservoir to the atmosphere.

2. Apparatus according to claim 1, characterized in that the number of connecting pipes between the vessel and the reservoir is equal to the number of safety means.

3. Apparatus according to claim 1 or claim 2, characterized in that the reservoir is oblong in shape and arranged along a horizontal axis, and its average cross-section in the horizontal plane is 100 to 10 000 times that of the sum of the safety means.

4. Apparatus according to one of claims 1 to 3, characterized in that a single chimney connects the reservoir to the atmosphere.

5. Apparatus according to one of claims 1 to 4, characterized in that at least one of the connecting pipes between the reservoir and the vessel is provided with a gas dispersing means able to change the direction of gases arriving from the vessel.

6. Apparatus according to one of claims 1 to 5, characterized in that it comprises at least one device for injecting a so-called inert liquid into the reservoir, i.e. a liquid that does not react with the ethylene and the decomposition gases, the operation of said injection device being activated by a means for detecting the opening of a safety means.

7. Apparatus according to claim 6, wherein the inert liquid injection means is arranged along the same axis as the connecting pipe between the vessel and reservoir.

8. Apparatus according to one of claims 1 to 7, further comprising:
— a safety means separating the reservoir from the chimney, and
— a recovery system for the evacuated gases, connected to the reservoir by a connecting pipe, the volume of the said system being such that the whole content of the high-pressure vessel can be recovered therein under a pressure lower than 50 bars.

9. Apparatus according to claim 8, characterized in that the volume of said recovery system is greater than that of said reservoir.

10. A process for reducing the chances of ignition and explosion resulting from the decomposition of ethylene in a high-pressure vessel, comprising evacuation the decomposition gases into an apparatus according to one of claims 1 to 9.

11. Process according to claim 10, characterized in that the decomposition gases are recovered, following their evacuating, under a pressure less than 50 bars, under an oxygen concentration of less than 5% and at a temperature lower than 450°C.

12. Process according to one of claims 10 and 11, characterized in that the reservoir of the evacuating apparatus is partly filled with an inert liquid of high heat of vaporization.

Fig. 1